Europäisches Patentamt

(19) European Patent Office

Office européen des brevets

(11) Publication number : **0 286 269 B1**

(12) **EUROPEAN PATENT SPECIFICATION**

(45) Date of publication of patent specification :
30.10.91 Bulletin 91/44

(51) Int. Cl.⁵ : **B60T 11/06**

(21) Application number : **88302536.3**

(22) Date of filing : **23.03.88**

(54) Control cable assembly.

(30) Priority : **23.03.87 US 28761**

(43) Date of publication of application :
**12.10.88 Bulletin 88/41**

(45) Publication of the grant of the patent :
**30.10.91 Bulletin 91/44**

(84) Designated Contracting States :
**DE ES FR GB IT**

(56) References cited :
**FR-A- 2 563 598**
**GB-A- 2 072 776**
**GB-A- 2 088 502**
**PATENT ABSTRACTS OF JAPAN, vol. 6, no.**
**167 (M-153)[1045], 31st August 1982**

(73) Proprietor : **BABCOCK INDUSTRIES INC.**
**425 Post Road**
**Fairfield Connecticut 06430 (US)**

(72) Inventor : **Jaksic, Miroslav**
**1929 Plymouth Road**
**Ann Arbor Michigan 48105 (US)**

(74) Representative : **Lewis, David Overington**
**Babcock International plc 217 Tabard Street**
**London SE1 4UR (GB)**

## Description

This invention relates to a control cable assembly and, more particularly, to a cable control assembly having a first, single, run extending from actuating means connected through a plurality of subsequent runs to respective means to be actuated. Such an assembly may be utilised in conjunction with a parking brake system for automobiles with the first, single, run extending from a parking brake lever and a pair of subsequent runs extending to rear wheel brake means, actuation of the parking brake lever effecting application of the brakes.

FR-A-2563598 discloses an arrangement in which a control cable assembly includes a first, single, run having a flexible conduit constrained to extend over an arcuate path and a flexible core, the flexible conduit being provided at one end with an anchorage for attachment to a relatively fixed location and the flexible core being provided at an end adjoining the said one end of the conduit with means for attachment to an actuating means, the flexible conduit being provided at the other end with a yoke, and at least two subsequent runs extending in opposed directions from adjacent the yoke, one of the subsequent runs being connected to the core of the first run and another of the subsequent runs being connected to the yoke, the subsequent runs each being provided at end portions remote from the yoke with attachment means for connection to means to be actuated.

However, this arrangement needs to be adjusted manually both on installation and during service to allow for wear. It is an object of the present invention to provide means for effecting automatic adjustment of the arrangement.

By the present invention there is provided a control cable assembly as set out in which the yoke includes an automatic adjuster mechanism adapted to maintain a pre-determined tension in the control cable assembly having a clutch mechanism movable between an engaged position in which the yoke is positioned axially relative to the flexible conduit and a disengaged position in which the yoke is free to move axially in relation to the flexible conduit, resilient biasing means acting along the flexible conduit to bias the yoke axially of the conduit, means arranged to move the clutch mechanism between the engaged position and the disengaged position actuable upon tension in the cable assembly attaining a pre-determined value and the tension in the cable assembly falling below said pre-determined value.

The invention will now be described, by way of example, with reference to the accompanying, partly diagrammatic, drawings, in which :

Figure 1 is a view of a parking brake control cable assembly ;

Figure 2 is a partially cross-sectioned view to an enlarged scale of a portion of the assembly shown in Figure 1 ; and

Figure 3 is a portion of Figure 2 to an enlarged scale.

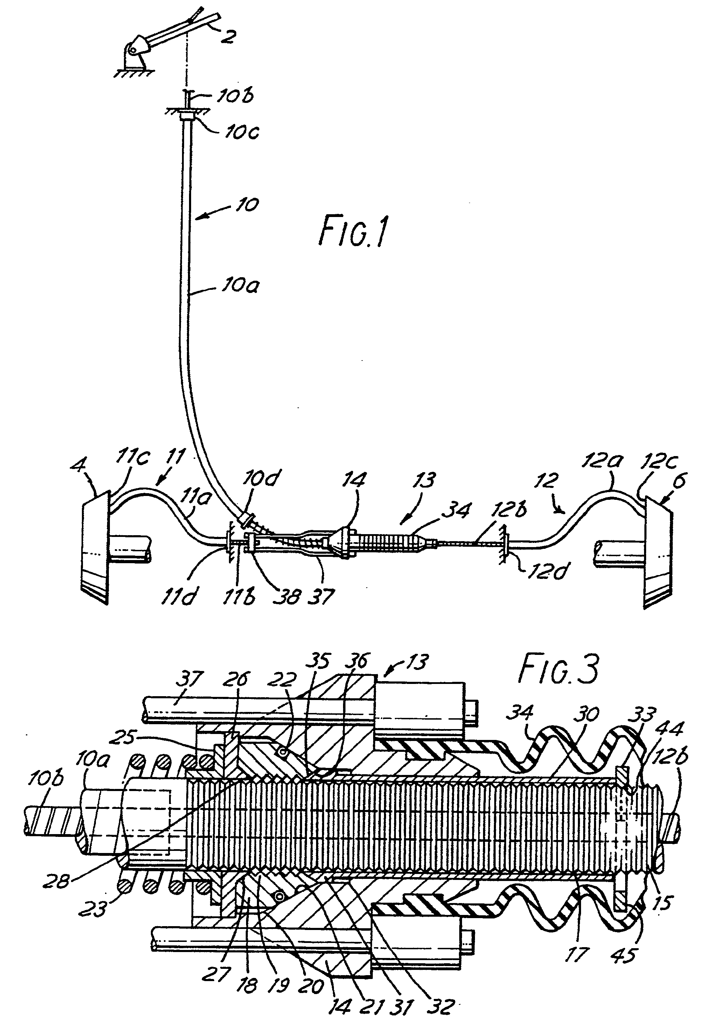

As shown in Figure 1, the cable control assembly is arranged between a parking brake lever 2 and rear brakes 4,6 of an automobile with a first cable run 10 connected through a pair of subsequent cable runs 11, 12 extending to the respective rear brakes.

Each run 10, 11 and 12 respectively includes a flexible conduit 10a, 11a, 12a and a stranded wire core 10b, 11b, 12b. The end 10c adjacent the lever 2 of conduit 10a is fixed in space. Both ends 11c and 11d of conduit 11 are fixed in space as are both ends 12c and 12d of conduit 12a.

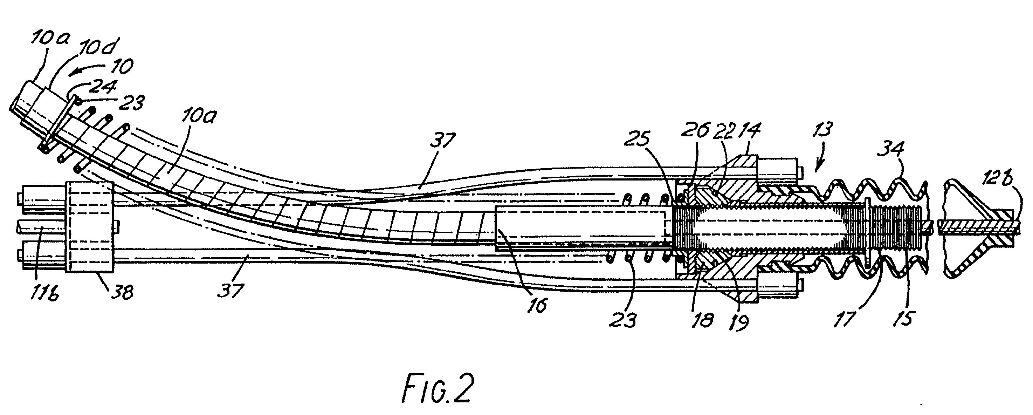

As shown in more detail in Figures 2 and 3, the cable runs 10, 11 are linked by a yoke in the form of an adjuster 13 having a tubular housing 14 and an inner member 15 to which conduit 10a is connected as by crimping at 16. Rods 37 extending through bores in the housing 14 connect the housing to a bracket 38 connected to core 11b. The core 10b extends through the inner member and continues as core 12b.

Clutch means releasably connecting the tubular housing 14 and the inner member 15 include collet members 18 positioned around the inner member 15 within a cup portion of the housing having a frusto-conical surface 20. Each collet member 18 has a first, external, part frusto-conical surface 21 at one end adapted to engage the complementary, frusto-conical surface 20 on the housing 14. A circumfefential retaining spring 22 extends circumferentially in aligned grooves in each collet member 18 resiliently to urge the collet members 18 radially inwardly into contact with the inner member 15. Each collet member 18 is also formed at the end thereof remote from the end having surface 21, with a second, internal, part frusto-conical surface 27, complementary to a second, external, frusto-conical surface 28 on an end cap 26 seating on a step in a bore formed in the housing 14. The radially inner faces of the collet members 18 and a portion of the inner member 15 are circumferentially grooved to form axially spaced, co-acting, 90° triangular profile, serrations 19, 17. The inter-engagement of the internal and external frusto-conical surfaces 27, 21 of the collect members 18 with the internal frusto-conical surface 20 of the housing 14 and the external frusto-conical surfaces 28 of the end cap 26 is such as to permit the collect members 18 to maintain a co-axial disposition and disengage over the complete length of the serrations 19 on the radially inner faces. A helical spring 23 interposed between an abutment 24 positioned intermediate the length of the conduit 10a and a retaining washer 25 seating on the end cap 26 resiliently urges the housing 20 to the right as seen in the drawings.

An axially movable release tube 30 extending through the housing 14 around the inner member 15 has an enlarged inner end 31 engaging a shoulder 32 on the housing 14 to retain the tube 30 against axially outward movement and is formed at a forward end with a third, external, frusto-conical surface 36.

Complementary, third, internal, part frusto-conical surfaces 35 are formed on the collet member 18 with a cone angle slightly greater than the cone angle of the surface 36.

A plastics clip 33 is formed with an elongate circular opening having a portion 44 the periphery of which is shaped to engage against the serrations 17 and a portion 45 of greater diameter than the inner member 15 but of lesser diameter than the release tube 30. A convoluted shroud or boot 34 of elastic material surrounds the clip 33 and seats on the housing 14 and the core 12b to provide a seal against dirt, oil and other deleterious matter.

In operation, to install the assembly, the clip 33 is moved into the position in which the clip is dis-engaged from the serrations 17 in the inner member 15 and a force applied to compress the spring 23 such that the inner member 15 moves to the right as viewed in the drawings, the force applied to the clip 33 being transmitted through the release tube 30 to urge the collet members 18 out of engagement with the inner member 15 by the inter-action of the frusto-conical surfaces 35, 36 and thereby permit axial movement of the inner members 15 relative to the housing 14.

Upon a sufficient degree of compression being achieved, the clip 33 is re-engaged with the serrations 17. The assembly is then positioned on the automobile, the outer ends of the stranded cores 10b, 11b and 12b respectively being secured to attachments on the parking brake lever 2 and brakes 4, 6 and the end 10c of conduit 10a together with both of the ends of each conduit 11a and 12a being positioned in respective anchorages. Finally the clip 33 is disengaged from the serrations 17.

If, as is likely, there is slack in the assembly at this juncture, the effect of the spring 23 is to urge the housing 14 to the right as viewed in the drawings. The spring bears on the retaining washer 25 and end cap 26 and, if the force is sufficient, effects disengagement of the serrations 19 on the collet members 18 from the serrations 17 on the inner member 15 by the inter-action of the frusto-conical surfaces 27, 28 such that the inner member 15 moves to the left relative to the housing 14 as viewed in the drawings and applies tension to the cores 10b, 11b and 12b.

Upon the helical spring 23 reaching an extension commensurate with the tension in the cable assembly, at an intermediate position of retraction of the inner member 15 into the housing 14, the resilience of the circumferential retaining spring 22 is such as to overcome the radial component of the force across the serrations 17, 19 and urge the collect members 18 radially inwardly to bring the serrations into engagement, thereby restraining axial movement between the housing 14 and the inner member 15. Movement of the collet members radially inwardly urges the release tube 30 axially outwardly. If, during use, the tension in the cable assembly falls below the force exerted by the helical spring 23 to an extent that axial movement of the inner member 15 relative to the housing 14 brings the frusto-conical faces 27, 28 into abutment and the radial component of the force across the serrations 17, 19 and the frusto-conical surfaces 27, 28 is sufficient to exceed the force exerted by the circumferential retaining spring 22, the inner member 15 being at an intermediate position of retraction, the collet members 18 move radially outwardly out of full engagement with the rod so that the respective serrations 17, 19 ratchet to a new axial position to restore the balance of forces by adjusting the effective length of the cable assembly within the limits imposed by the length of the housing 14, whereupon the collet members 18 re-engage the inner member 15 thereby again locking the inner member to the houseing 14.

Since the convoluted shroud or boot 34 is flexible, movement of the clip 33 can be effected by applying manual pressure to the outer surface of the convoluted shroud or boot adjacent the clip 33, so that the convoluted shroud or boot serves at all times to limit ingress of grease or dirt or other deleterious matter into the housing 14.

Thus it will be appreciated that the adjuster serves both to take up slack in the cable assembly up initial installation on the automobile and to take up wear of the brakes and elongation of the stranded core during service.

It will be appreciated that, in instances where initial tensioning of the cable run may be effected at another location in the cable run, the release tube 30 and clip 33 may be omitted from the adjuster 13, which will then serve solely to maintain tension in the cable run within predetermined limits.

It also will be appreciated that the serrations may be formed as a screw thread rather than axially spaced circumferential grooves, and in such instance the clip 33 may take the form of a threaded nut — the shroud 34 being rolled back to gain access to the nut in order to effect rotation and thus axial movement of the inner member 15 relative to the housing 14.

It further will be appreciated that the adjuster 13 may take alternative forms to effect connection between the housing 14 and the inner member 15, so long as the connection is automatically releasable upon the tension in the cable assembly falling below a pre-determined value in order to permit the helical spring 23 to become effective to restore the tension in the cable assembly to the pre-determined value, whereupon that tension being attained the connection is automatically re-established.

## Claims

1. A control cable assembly including first, single, run (10) having a flexible conduit (10a) constrained to extend over an arcuate path and a flexible core (10b), the flexible conduit (10a) being provided at one end (10c) with an anchorage for attachment to a relatively fixed location and the flexible core (10b) being provided at an end adjoining the said one end (10c) of the conduit (10a) with means for attachment to an actuating means (2), the flexible conduit being provided at the other end with a yoke (13), and at least two subsequent runs (11, 12) extending in opposed directions from adjacent the yoke (13), one (12) of the subsequent runs being connected to the core (10b) of the first run (10) and another (11) of the subsequent runs being connected to the yoke (13), the subsequent runs provided at end portions remote from the yoke with attachment means for connection to means to be actuated (4, 6), characterised in that the yoke (13) includes an automatic adjuster mechanism adapted to maintain a pre-determined tension in the control cable assembly having a clutch mechanism (18, 26, 14) movable between an engaged position in which the yoke (13) is positioned axially relative to the flexible conduit (10a) and a disengaged position in which the yoke (13) is free to move axially in relation to the flexible conduit (10a), resilient biasing means acting along the flexible conduit to bias the yoke axially of the conduit, means (26) arranged to move the clutch mechanism between the engaged position and the disengaged position actuable upon tension in the cable assembly attaining a pre-determined value and the tension in the cable assembly falling below said pre-determined value.

2. A control cable assembly as claimed in Claim 1, characterised in that the clutch mechanism (18, 26, 14) includes, mounted on the yoke (13), a tubular housing (14) formed with a cup portion having an internal, first frusto-conical surface (20), collet members (18) each formed with external, first part frusto-conical faces (21) arranged to co-act with the first frusto-conical surface (20) to urge the collet members (18) radially inwardly into engagement with an inner member (15) extending co-axially of the housing (14) and an end cap (26) formed with an external, second frusto-conical surface (28) arranged to co-act with internal, second part frusto-conical faces respectively formed on the collet members (18) to urge the collet members radially outwardly to a position disengaged from the inner member (15).

3. A control cable assembly as claimed in Claim 2, characterised in that the collet members (18) are resiliently biassed radially inwardly by circumferential spring means (22) positioned in circumferentially extending grooves in the collet members (18).

4. A control cable assembly as claimed in Claim 2 or Claim 3, characterised in that the collet members (18) are formed on radially inner faces with serrations (19) arranged to co-act with serrations (17) formed on the inner member (15).

5. A control cable assembly as claimed in any preceding Claim, characterised in that the inner member (15) is crimped on to the conduit (10a) of the first run (10).

6. A control cable assembly as claimed in any preceding Claim, characterised in that a release tube (30) extends co-axially of the inner member (15), intermediate the inner member and the tubular housing (14), and, at an axially inner end, is formed with an external, third frusto-conical surface (36) arranged to co-act with internal, third part frusto-conical faces respectively formed on the collet members (18) such that relative movement of the release tube (30) axially inwardly urges the collet members (18) radially outwardly.

7. A control cable assembly as claimed in Claim 6, characterised in that the release tube (30) is positionable axially of the inner member (15) by means of a clip (33) engageable with the serrations (17) on the inner member (15).

8. A control cable assembly as claimed in any one of Claims 2 to 7, characterised in that the resilient biassing means (23) includes a helical compression spring extending between an abutment (24) positioned intermediate the length of the conduit (10) of the first run (10) and a retaining washer (25) seating on the end cap (26).

9. A control cable assembly as claimed in any preceding Claim, characterised in that the yoke (13) includes a bracket (38) connected to the housing by rods (37) and also connected to the core (11b) of the said another of the subsequent runs (11).

10. A control cable assembly as claimed in any preceding Claim, characterised in that the subsequent runs (11, 12) each include conduit portions (11a, 12a) provided with anchorages at each end (11c, 11d and 12c, 12d) thereof.

## Patentansprüche

1. Seil-Betätigungsanordnung mit folgenden Merkmalen : eine erste einzelne Bahn (10) weist eine biegsame Führungshülle (10a) auf, die sich zwangsweise über einen gebogenen Weg erstreckt und einen biegsamen Kern (10b) enthält ; die biegsame Führungshülle (10a) ist an einem Ende (10c) mit einer Verankerung zur Befestigung an einer relativ festgelegten Stelle versehen und der biegsame Kern (10b) ist an einem, diesem Ende (10c) der Führungshülle (10a) benachbarten Ende mit einer Befestigungseinrichtung für eine Betätigungseinrichtung (2) versehen ; die biegsame Führungshülle ist an ihrem anderen Ende mit einem Joch (13) versehen ; mindestens zwei nachfolgende Bahnen (11, 12) erstrecken sich in entgegengesetzten Richtungen von der Nachbarschaft des Jochs (13) ; eine (12) der nachfolgenden Bahnen ist mit dem Kern (10b) der ersten Bahn (10) und die andere (11) der nachfolgenden Bahnen ist mit dem Joch (13) verbunden ; die nachfolgenden Bahnen sind an ihren vom Joch entfernten Endteilen mit Befestigungseinrichtungen zur Verbindung zu zu betätigenden Einrichtungen (4, 6) versehen, dadurch gekennzeichnet, daß das Joch (13) eine automatische Einstelleinrichtung umfaßt, die zur Aufrechterhaltung einer vorbestimmten Spannung in der Seil-Betätigungsanordnung eingerichtet ist und einen Kupplungsmechanismus (18, 26, 14) aufweist, der zwischen einer Eingriffsstellung, in welcher das Joch (13) axial relativ zu der biegsamen Führungshülle (10a) positioniert ist, und einer Außereingriffsstellung verschiebbar ist, in welcher das Joch (13) frei ist, sich axial mit Bezug auf die biegsame Führungshülle (10a) zu bewegen, daß eine federnde Vorspannungseinrichtung entlang der biegsamen Führungshülle wirkt, um das Joch axial mit Bezug auf die Führungshülle vorzuspannen, daß eine Einrichtung (26) zur Verschiebung des Kupplungsmechanismus zwischen der Eingriffsstellung und der Außereingriffsstellung angeordnet ist, die wirksam wird, wenn die Zugspannung in der Seilanordnung einen vorbestimmten Wert erreicht, bzw. wenn um die Zugspannung in der Seilanordnung unterhalb dieses vorbestimmten Wertes fällt.

2. Seil-Betätigungsanordnung nach Anspruch 1, dadurch gekennzeichnet, daß der Kupplungsmechanismus (18, 26, 14), auf dem Joch (13) montiert, ein rohrförmiges Gehäuse (14) einschließt, die einen becherförmigen Teil mit einer inneren ersten konischen Oberfläche (20) aufweist, daß Spannzangenglieder (18) jeweils mit äußeren ersten teilweise konischen Seiten (21) zur Zusammenarbeit mit der ersten konischen Oberfläche (20) angeordnet sind, um die Spannzangenglieder (18) radial einwärts in Eingriff mit einem inneren Teil (15) zu drängen, welches sich koaxial zum Gehäuse (14) erstreckt, und daß eine Endkappe (26) mit einer angeformten, äußeren zweiten konischen Oberfläche (28) zur Zusammenarbeit mit den inneren zweiten teilweise konischen Flächen angeordnet ist, die jeweils auf den Spannzangengliedern (18) angeformt sind, um die Spannzangenglieder radial nach außen in eine Stellung außer Eingriff von dem inneren Teil (15) zu drängen.

3. Seil-Betätigungsanordnung nach Anspruch 2, dadurch gekennzeichnet, daß die Spannzangenglieder (18) durch eine Umfangsfedereinrichtung (22) nachgiebig radial nach innen vorgespannt werden, die in sich in Umfangsrichtung erstreckende Nuten in den Spannzangengliedern (18) angeordnet ist.

4. Seil-Betätigungsanordnung nach Anspruch 2 oder 3, dadurch gekennzeichnet, daß die Spannzangenglieder (18) auf radial inneren Oberflächen mit Wellungen (19) geformt sind, die zur Zusammenarbeit mit auf dem inneren Teil (15) angeformten Wellungen (17) zusammenarbeiten.

5. Seil-Betätigungsanordnung nach einem der vorhergehenden Ansprüche, dadurch gekennzeichnet, daß das inneren Teil (15) auf die Führungshülle (10a) der ersten Bahn (10) angebördelt ist.

6. Seil-Betätigungsanordnung nach einem der vorhergehenden Ansprüche, dadurch gekennzeichnet, daß ein Entriegelungsrohr (30) sich koaxial zu dem inneren Teil (15) erstreckt, und zwar zwischen dem inneren Teil und dem rohrförmigen Gehäuse (14) und seinem axial inneren Ende mit einer äußeren dritten konischen Oberfläche (36) versehen ist, die zur Zusammenarbeit mit den dritten inneren teilweise honischen Flächen angeordnet ist, die jeweils an den Spannzangengliedern (18) angeformt sind, so daß die relative Verschiebung des Entriegelungsrohrs (30) axial nach innen die Spannzangenglieder (18) radial nach außen drängt.

7. Seil-Betätigungsanordnung nach Anspruch 6, dadurch gehennzeichnet, daß das Entriegelungsrohr (30) axial zum inneren Teil (15) mittels eines Clips (33) positionierbar ist, der in den Wellungen (17) auf dem inneren Teil (15) eingreifen kann.

8. Seil-Betätigungsanordnung nach einem der Ansprüche 2 bis 7, dadurch gekennzeichnet, daß die federnde Vorspannungseinrichtung (23) eine Kompressionsschraubenfeder umfaßt, die sich zwischen einem Anschlag (24), der im Zuge der Länge der Führungshülle (10) der ersten Bahn (10) angeordnet ist, und einem Rückhaltering (25) erstreckt, der auf der Endkappe (26) sitzt.

9. Seil-Betätigungsanordnung nach einem der vorhergehenden Ansprüche, dadurch gekennzeichnet, daß das Joch (13) einen Bügel (38) aufweist, der mit dem Gehäuse über Stangen (37) verbunden ist und auch mit dem Kern (11b) der anderen der nachfolgenden Bahnen (11) in Verbindung steht.

10. Seil-Betätigungsanordnung nach einem der vorhergehenden Ansprüche, dadurch gekennzeichnet, daß die nachfolgenden Bahnen (11, 12) jeweils Führungshüllenteile (11a, 12a) umfassen, die an jedem Ende (11c, 11d und 12c, 12d) mit Verankerungen versehen sind.

**Revendications**

1. Ensemble de commande Bowden comprenant une première longueur (10), simple, comportant un conduit flexible (10a) contraint de manière à s'étendre sur un arc et un coeur flexible (10b), le conduit flexible (10a) étant muni à une extrémité (10c) d'un ancrage pour fixation en un emplacement relativement fixe et le coeur flexible (10b) étant muni à une extrémité adjacente à ladite extrémité (10c) du conduit (10a) d'un moyen de fixation à un moyen d'actionnement (2), le conduit flexible étant doté à son autre extrémité d'un coupleur (13), et au moins deux longueurs suivantes (11, 12) s'étendant dans des directions opposées depuis le coupleur (13), l'une (12) des longueurs suivantes étant reliée au coeur (10b) de la première longueur (10) et l'autre (11) étant reliée au coupleur (13), les longueurs suivantes étant chacune dotées aux portions d'extrémité éloignées du bâti d'un moyen de fixation pour connection aux moyens à actionner (4, 6), caractérisé en ce que le couleur (13) comprend un mécanisme de réglage automatique adapté à maintenir une tension prédéterminée dans l'ensemble de commande Bowden comportant un mécanisme d'embrayage (18, 26, 14) mobile entre une position d'engagement dans laquelle le bâti (13) est disposé axialement par rapport au conduit flexible (10a) et une position de dégagement dans laquelle le bâti (13) est libre de se déplacer axialement par rapport au conduit flexible (10a), un moyen de sollicitation élastique agissant le long du conduit flexible afin de solliciter le coupleur axialement relativement au conduit, un moyen (26) agencé pour déplacer le mécanisme d'embrayage entre la position d'engagement et la position de dégagement pouvant être actionné lorsque la tension dans l'ensemble de câble atteint une valeur prédéterminée et lorsque ladite tension dans l'ensemble de câble tombe en dessous de ladite valeur prédéterminée.

2. Ensemble de commande Bowden selon la revendication 1, caractérisé en ce que le mécanisme d'embrayage (18, 26, 14) comprend, monté sur le coupleur (13), un boîtier tubulaire (14) doté d'une portion en cuvette comportant une première surface interne (20), tronconique, des douilles de serrage (18) dotées chacune de premières surfaces externes (21), en partie tronconiques, disposées de manière à coopérer avec la première surface tronconique (20) pour solliciter les douilles de serrage (18) radialement vers l'intérieur en engagement avec un organe interne (15) s'étendant co-axialement au boîtier 14 et un capuchon d'extrémité (26) doté d'une deuxième surface externe (28), tronconique disposée de manière à coopérer avec des deuxièmes surfaces internes en partie tronconiques formées respectivement sur les douilles de serrage (18) afin de solliciter les douilles de serrage radialement vers l'extérieur jusqu'à une position de dégagement de l'organe interne (15).

3. Ensemble de commande Bowden selon la revendication 2, caractérisé en ce que les douilles de serrage (18) sont sollicitées élastiquement radialement vers l'intérieur par un moyen élastique circonférentiel (22) disposé dans des gorges s'étendant circonférentiellement dans les douilles de serrage (18).

4. Ensemble de commande Bowden selon la revendication 2 ou 3, caractérisé en ce que les douilles de serrage (18) sont dotées sur leurs faces internes radialement de crans (19) agencés pour coopérer avec des crans (17) formés sur l'organe interne (15).

5. Ensemble de commande Bowden selon l'une quelconque des revendications précédentes, caractérisé en ce que l'organe interne (15) est serti sur le conduit (10a) de la première longueur (10).

6. Ensemble de commande Bowden selon l'une quelconque des revendications précédentes, caractérisé en ce qu'un tube de dégagement (30) s'étend co-axialement à l'organe interne (15), entre l'organe interne et le boîtier tubulaire (14), et, à une extrémité interne axialement, est doté d'une troisième surface externe (36), tronconique, disposée de manière à coopérer avec des troisièmes surfaces internes en partie tronconiques, formées respectivement sur les douilles de serrage (18) de manière que le déplacement relatif du tube de dégagement (30) axialement vers l'intérieur sollicite les douilles de serrage (18) radialement vers l'extérieur.

7. Ensemble de commande Bowden selon la revendication 6, caractérisé en ce que le tube de dégagement (30) peut être positionné axialement à l'organe interne (15) au moyen d'un dispositif de serrage (33) pouvant être engagé avec les crans (17) sur l'organe interne (15).

8. Ensemble de commande Bowden selon l'une quelconque des revendications 2 à 7, caractérisé en ce que le moyen de sollicitation élastique (23) comprend un ressort de compression hélicoïdal s'étendant entre une butée (24) positionnée à mi-longueur du conduit (10) de la première longueur (10) et une rondelle de retenue (25) reposant sur le capuchon d'extrémité (26).

9. Ensemble de commande Bowden selon l'une quelconque des revendications précédentes, caractérisé en ce que le coupleur (13) comprend un support (38) relié au boîtier par des tiges (37) et également relié au coeur (11b) de ladite autre longueur suivante (11).

10. Ensemble de commande Bowden selon l'une quelconque des revendications précédentes, caractérisé en ce que les longueurs suivantes (11, 12) comprennent chacune des portions de conduit (11a, 12a) dotées d'ancrages à chaque extrémité (11c, 11d et 12c, 12d).

FIG.1

FIG.3

FIG.2

EP 0 286 269 B1